(19) Europäisches Patentamt
European Patent Office
Office européen des brevets

(11) **EP 0 977 978 B1**

(12) **EUROPÄISCHE PATENTSCHRIFT**

(45) Veröffentlichungstag und Bekanntmachung des Hinweises auf die Patenterteilung:
**28.04.2004  Patentblatt 2004/18**

(21) Anmeldenummer: **98912270.0**

(22) Anmeldetag: **18.02.1998**

(51) Int Cl.[7]: **G01L 5/04**

(86) Internationale Anmeldenummer:
**PCT/DE1998/000486**

(87) Internationale Veröffentlichungsnummer:
**WO 1998/038482 (03.09.1998 Gazette 1998/35)**

(54) **EINRICHTUNG ZUR MESSUNG DER ZUGSPANNUNGSVERTEILUNG IN EINEM METALLBAND**

DEVICE FOR MEASURING TENSILE STRESS DISTRIBUTION IN A METAL STRIP

DISPOSITIF POUR LA MESURE DE LA REPARTITION DE LA CONTRAINTE DE TRACTION DANS UNE BANDE METALLIQUE

(84) Benannte Vertragsstaaten:
**AT BE DE FI FR GB NL SE**

(30) Priorität: **26.02.1997  DE 19707691
29.01.1998  DE 19803260**

(43) Veröffentlichungstag der Anmeldung:
**09.02.2000  Patentblatt 2000/06**

(73) Patentinhaber: **SIEMENS AKTIENGESELLSCHAFT
80333 München (DE)**

(72) Erfinder:
• **BERGHS, André
D-91077 Neunkirchen (DE)**
• **BAUMANN, Joachim
D-81925 München (DE)**
• **BEYFUSS, Martin
D-81479 München (DE)**
• **TÜRK, Felix
D-81541 München (DE)**

(56) Entgegenhaltungen:
DE-A- 1 573 712      US-A- 3 538 765
US-A- 3 718 034      US-A- 3 850 031
US-A- 4 711 133

## Beschreibung

Die Erfindung betrifft ein Verfahren bzw. eine Einrichtung zur Messung der Zugspannungsverteilung über die Breite eines Metallbandes zwischen zwei Walzgerüsten oder zwischen einem Walzgerüst und einem Haspel. Die Erfindung ist außerdem im Zusammenhang mit S-Rollen und Streckgerüsten einsetzbar.

Beim Walzen von Metallbändern, insbesondere beim Kaltwalzen, muss die Zugspannungsverteilung im Metallband entlang der Metallbreite on-line bestimmt, d.h. in der Regel gemessen werden, denn die Zugspannungsverteilung ist die entscheidende Größe für die Regelung der Planheit des Metallbandes.

Es ist z.B. bekannt, das Metallband über eine sogenannte Messrolle, d.h. eine segmentierte Umlenkrolle, zu führen, die in Abständen von ca. 2-5 cm piezoelektrische Drucksensoren aufweist. Die auf die Sensoren wirkende Kraft ist dabei ein Maß für die Zugspannungsverteilung. Das Verfahren ist berührend - und kann daher Eindrücke im Metall hinterlassen - und ist zudem verschleißbehaftet und somit wartungsintensiv.

Ferner ist aus der DE-OS-26 17 958 eine Einrichtung zur Messung der Zugspannung eines Metallbandes bekannt, wobei mittels Elektrohämmer Schwinungswellen im Metallband erzeugt werden, deren Ausbreitung gemessen wird. Auch dieses Verfahren ist mit oben genantnen Nachteilen behaftet.

Weiterhin ist es aus der DE-PS 31 30 572 bekannt, die Messung der Zugspannung eines Metallbandes mittels Ultraschall zu messen. Dazu wird dem Metallband mittels Ultraschall eine Schwingung aufgeprägt, und deren Ausbreitung gemessen. Es hat sich jedoch gezeigt, daß dieses Verfahren aufgrund der geringen Energieübertragung durch Ultraschall nur in Ausnahmefallen, insbesondere bei besonders dünnen Metallbändern, geeignet ist.

Aus der US 3,538,765 ist es bekannt, einen konstanten Luftstrom zum Abstoßen des Metallbandes gegen das Metallband zu blasen, um eine Auslenkung des Metallbandes zu erzielen.

Aufgabe der Erfindung ist es, eine Einrichtung zur Vermeidung oben bezeichneter Nachteile anzugeben.

Die Aufgabe wird erfindungsgemäß durch eine Einrichtung gemäß Anspruch 1 gelöst. Dabei weist die erfindungsgemäße Einrichtung zur Messung der Zugspannungsverteilung in einem Metallband zwischen zwei Walzgerüsten, zwischen einem Walzgerüst und einem Haspel, in einem Streckgerüst oder vor oder hinter einer Umlenkrolle eine (vor oder hinter einer Rolle angeordnete) Auslenkvorrichtung zur Auslenkung des Metallbandes, eine Meßvorrichtung zur Messung der Auslenkung des Metallbandes und eine Recheneinrichtung zur Berechnung der Zugspannungsverteilung in Abhängigkeit der Auslenkung des Metallbandes auf, wobei die Auslenkvorrichtung als Saugvorrichtung zum Ansaugen des Metallbandes ausgebildet ist. Diese Einrichtung ermöglicht zum einen eine Messung der Zugspannung bzw. Zugspannungsverteilung ohne Beschädigung des Metallbandes, und liefert zum anderen ein besonders starkes und präzises Meßsignal, das eine besonders genaue Bestimmung der Zugspannung bzw. Zugspannungsverteilung im Metallband erlaubt. Die erfindungsgemäße Einrichtung ist außerdem gegenüber einer Meßrolle deutlich einfacher und kostengünstiger.

Weitere Vorteile und Einzelheiten ergeben sich aus der nachfolgenden Beschreibung von Ausführungsbeispielen und aus den Unteransprüchen. Im einzelnen zeigen:

FIG 1    eine beispielhafte Ausgestaltung einer Saugvorrichtung,
FIG 2    eine alternative Ausgestaltung einer Saugvorrichtung,
FIG 3    eine weitere alternative Ausgestaltung einer Saugvorrichtung,
FIG 4    eine vorteilhafte Ausgestaltung von Klappen einer Saugvorrichtung,
FIG 5    eine Anordnung von Sensoren,
FIG 6    eine alternative Anordnung von Sensoren, und
FIG 7    einen Vergleich zwischen ermittelter und tatsächlicher Zugspannung.

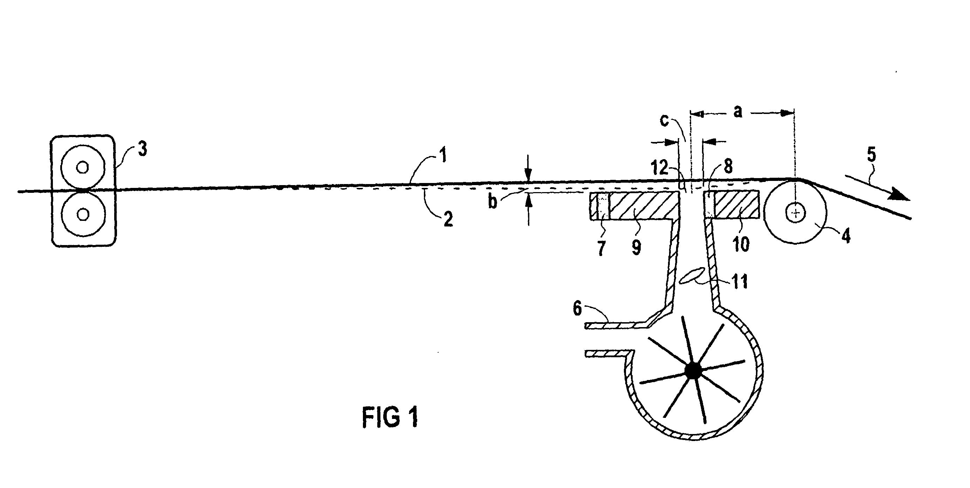

FIG 1 zeigt eine erfindungsgemäße Einrichtung zur Messung der Zugspannungsverteilung in einem Metallband 1 in beispielhafter Ausgestaltung. Das Metallband 1 läuft aus einem Walzgerüst 3 aus und wird über eine Umlenkrolle 4 in Richtung des Pfeils 5 geführt. Im Abstand a, vorteilhafterweise 10 bis 30 cm, von der Umlenkrolle 4 ist eine Saugvorrichtung 6 angeordnet. Durch die Wahl des Abstands a von 10 bis 30 cm wird eine besonders gute Ortsauflösung der Zugspannung über die Bandbreite erreicht. Am oberen Ende der Saugvorrichtung 6 sind Platten 9 und 10 angeordnet. Der durch die Saugvorrichtung eingesaugte Luftstrom bewirkt eine Auslenkung des Metallbandes 1. Diese Auslenkung ist durch die gestrichelte Linie 2 angedeutet. In die Platten 9 und 10 der Saugvorrichtung sind Auslenkungssensoren 7 und 8 integriert, die die Auslenkung 2 des Metallbandes 1 messen. Die Auslenkungssensoren 7 und 8 sind als Wirbelstromsensoren, kapazitive Abstandssensoren, optische Wegsensoren oder Ultraschallabstandssensoren ausgebildet. Dabei ist die Ausbildung als, insbesondere zeitlich synchronisierte, Wirbelstromsensoren besonders vorteilhaft. Die Abstandssensoren sind in besonders vorteilhafter Weise als Sensorzeilen über die Breite des Metallbandes 1 ausgebildet.

Die Saugvorrichtung 6 weist eine Drehklappe 11 auf, mittels der der eingesaugte Luftstrom moduliert wird. Dabei wird der Luftstrom vorteilhafterweise mit einer Frequenz von 5 bis 40, insbesondere mit einer Frequenz von 5 bis 20 Hz, moduliert. Auf diese Weise wird ohne zusätzliche Dämpfung eine fast quasi statische Auslenkung erreicht, so daß es auch ohne zusätzliche Dämpfungsmaßnahmen zu einer im wesentlichen zur anregenden Kraft proportionalen und zur Zugspannungsverteilung umgekehrt proportionalen Auslenkung kommt. Auf diese Weise läßt sich die Zugspannungsverteilung besonders präzise messen. Es hat sich als besonders vorteilhaft erwiesen, das Metallband 1 mit einer Frequenz anzuregen, die unterhalb seiner Resonanzfrequenz liegt. Überraschenderweise läßt sich in diesem Frequenzbereich eine präzisere Messung der Zugspannungsverteilung erreichen.

Die Platten 9 und 10 sind in einem Abstand b von vorteilhafterweise 1 bis 10 mm, insbesondere 5 mm, vom Metallband 1 angeordnet. Zwischen den Metallplatten 9 und 10 ist ein Spalt der Breite c vorgesehen. Dieser Spalt ist vorteilhafterweise 0,5 bis 5 cm breit. Besonders vorteilhaft ist eine Spaltbreite c = 2 cm.

Die Platten 9 und 10 sind etwa 20 cm breit, so daß der durch die Saugvorrichtung 6 bewirkte Unterdruck auf eine endliche Fläche des Metallbands 1 wirkt.

Zur Auswertung der von den Abstandssensoren 7 und 8 gelieferten Meßsignale ist eine nicht dargestellte Auswerteeinrichtung vorgesehen.

Die Saugvorrichtung 6 ist dermaßen dimensioniert, daß zwischen den Platten 9 und 10 und dem Metallband 1 ein Unterdruck zwischen 5 und 50 mbar entsteht.

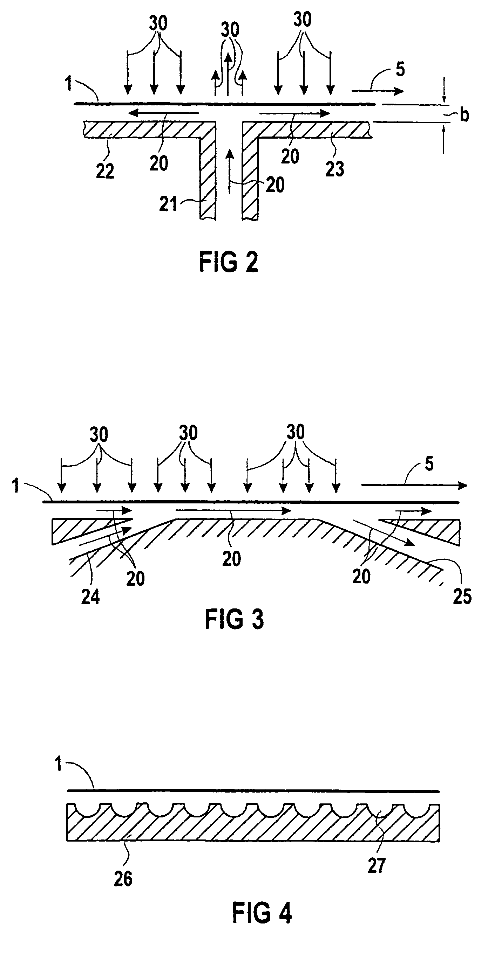

FIG 2 zeigt eine alternative Ausgestaltung einer Saugvorrichtung 21. In FIG 2 und 3 deuten die mit Bezugszeichen 20 gekennzeichneten Pfeile die Bewegung der Luft (mit einer Frequenz zwischen 5 und 20 Hz gepulster Luftstrom) an und die mit 30 bezeichneten Pfeile die aufgrund der Luftbewegung auf das Metallband 1 wirkenden Kräfte. Mittels der Saugvorrichtung 21 wird Luft gegen das Metallband 1 geblasen und seitlich parallel zur und gegen die Bandlaufrichtung 5 abgeführt. Die Geschwindigkeit der Luft und der Abstand b zwischen an der Saugvorrichtung 21 angeordneten Platten 22 und 23 und dem Metallband 1 stehen derart in Beziehung, daß das hydrodynamische Paradoxon wirksam ist. Das heißt, obwohl Luft gegen das Metallband 1 geblasen wird, wird das Metallband 1 aufgrund der hohen Luftgeschwindigkeit von der Saugvorrichtung 21 angezogen.

Dieses Prinzip liegt auch der Ausgestaltung einer Saugvorrichtung 24 gemäß FIG 3 zugrunde, wobei FIG 3 eine besonders vorteilhafte Ausgestaltung des in FIG 2 beschriebenen Grundprinzips darstellt. Mittels der Saugvorrichtung 24 wird Luft gegen das Metallband 1 geblasen. Der Druck dieser Luft ist so hoch, daß die Strömungsgeschwindigkeit der Luft das hydrodynamische Paradoxon wirksam werden läßt: Das Metallband 1 wird von der Saugvorrichtung 24 angezogen. Zusätzlich kann ein Saugkanal 25 vorgesehen werden, mittels dessen Luft zusätzlich angesaugt wird. Die Ausgestaltung gemäß FIG 3 erlaubt hohe Strömungsgeschwindigkeiten der Luft zwischen Metallband 1 und Saugvorrichtung 24, was wiederum zu einer starken Anziehung des Metallbandes führt.

FIG 4 zeigt einen Querschnitt durch ein Metallband 1 und eine Platte 26. Die Platte 26 ist eine besonders vorteilhafte Ausgestaltung für die Platten 9, 10, 22 und 23 bzw. für die dem Metallband 1 zugewandte Oberfläche der Saugvorrichtung 24. In die Platte 26 sind Kanäle 27 eingefräst, die in Richtung des Bandlaufes verlaufen. Auf diese Weise kann die Strömungsrichtung der Luft unter dem Metallband 1 beeinflußt werden. Außerdem kann vorgesehen werden, die Strömungsgeschwindigkeit der Luft in den Kanälen 27 einzeln anzusteuern und so Meßzonen zu definieren, denen eine bestimmte Kraft aufgeprägt wird.

Bei Warmwalzgerüsten besteht die Möglichkeit, anstelle von Luft eine Flüssigkeit (Wasser, Emulsion oder ähnliches) mit hohem Druck gepulst auf das Walzgut zu spritzen, um so eine periodische Kraft zu erzeugen. Diese Emulsion bewirkt gleichzeitig eine Kühlung der Auslenkungssensoren, die den hohen Temperaturen beim Warmwalzen (bis 1000°C) ohne Kühlung nicht standhalten.

Die Abstandssensoren 7 und 8 liefern, bedingt durch verschiedene Störeinflüsse bei der Auslenkung des Metallbandes 1, stark verrauschte Meßsignale. Deshalb werden die Meßsignale gefiltert. Die Signalfilterung erfolgt vorteilhafterweise mittels eines digitalen Fit-Algorithmus oder einer FFT-Analyse. Das Metallband 1 wird sinusförmig ausgelenkt. Der zeitliche Verlauf des Meßsignals pro Periode ist deshalb im Idealfall ein Sinus. Diesem Sinussignal sind jedoch Störsignale, insbesondere die Resonanzschwingungen des Metallbandes 1 überlagert. An das Meßsignal wird deshalb nach jeder vollen Periode eine Sinuskurve angefittet (Minimierung der Fehlerquadrate). Da Phase und Frequenz bekannt sind, sind der Signaloffset (Grundabstand der Sensoren) und die Amplitude die einzigen Fitparameter. Der ermittelte Amplitudenwert $A_F$ wird weiter in die Zugspannung umgerechnet.

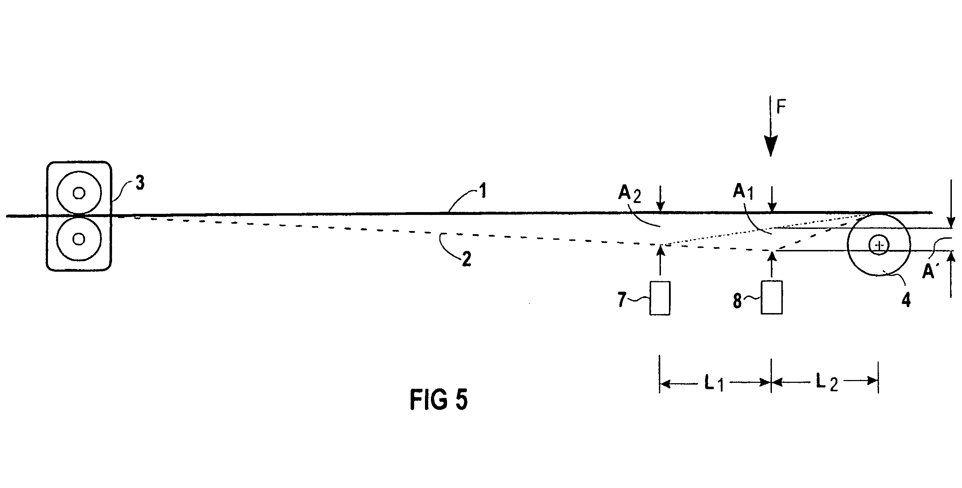

Eine weitere deutliche Verbesserung der Filterung wird durch die Verwendung zweier Abstandssensoren 7 und 8 gemäß dem Ausführungsbeispiel aus FIG 1 bzw. FIG 5 und eine Auswertung des Ausdrucks

$$A' = A_1 - \frac{L_2}{L_1 + L_2} A_2 \qquad (1)$$

erreicht. A' ist ein Maß für die Krümmung des Metallbandes 1 am Ort der Krafteinleitung. Für langwellige Resonanzschwingungen ist die Krümmung gering. Sie werden deshalb effektiv herausgefiltert. Die erzwungene Auslenkung dagegen erzeugt einen "Knick" des Metallbandes 1 am Ort der Krafteinleitung. Im Ausdruck A' ist also der Informationsgehalt in bezug auf die durch die Saugvorrichtung erzwungene Auslenkung des Metallbandes deutlich größer als in den Meßsignalen $A_1$ und $A_2$, die von den Sensoren 8 und 7 geliefert werden.

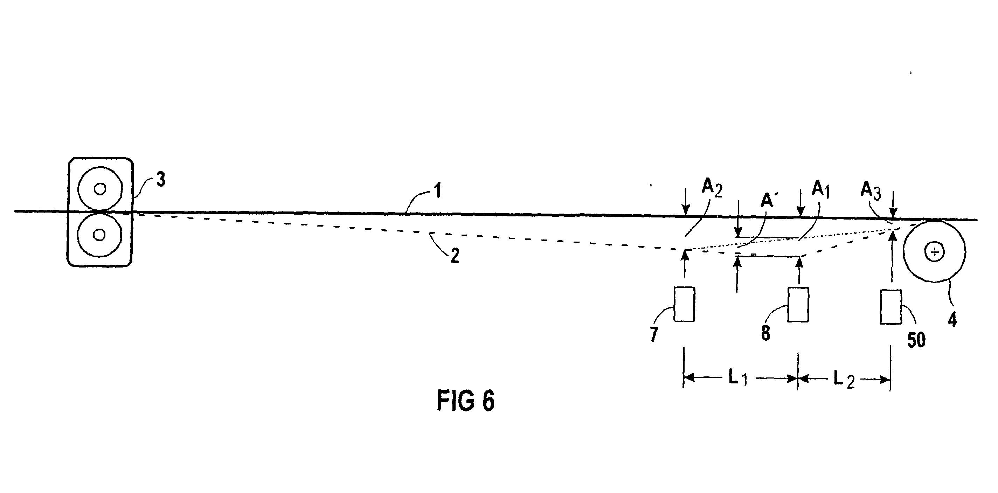

FIG 6 zeigt die Anordnung von drei Abstandssensoren, die insbesondere als Sensorzeilen ausgebildet sind. Dabei ist ein dritter Abstandssensor 50 zur Messung des Abstands $A_3$ vorgesehen.

Der Wert für A' wird bei der Verwendung dreier Abstandssensoren vorteilhafterweise gemäß

$$A' = A_1 - \frac{L_2}{L_1 + L_2} A_2 - \frac{L_1}{L_1 + L_2} A_3 \qquad (2)$$

korrigiert. Auf diese Weise können Fehler durch unrunde Walzen oder Durchbiegungen einer Walze kompensiert werden.

Aus den Werten A' wird durch eine FFT oder einen Fitalgorithmus ein Amplitudenwert $A'_F$ gebildet, der prinzipiell dem Amplitudenwert $A_F$ entspricht, jedoch nicht aus direkten Meßwerten, sondern aus den Werten A' gebildet wird.

Die Umrechnung der Amplitudenverteilung $A'_F$ (x) in eine Zugspannungsverteilung σ(x) erfolgt gemäß

$$\sigma(x) = C(x) \, F(x) \, [1/A'_F(x) - 1/A_0]. \qquad (3)$$

Dabei bezeichnet x die Ortskoordinate entlang der Breite des Metallbandes 1.

$A'_F(x)$ ist die gemessene Amplitudenverteilung der Auslenkung, die gemäß Gleichung 1 bzw. Gleichung 2 und durch den digitalen Fitalgorithmus berechnet wird. F(x) ist die Kräfteverteilung mit der das Metallband 1 ausgelenkt wird und ist einmalig experimentell zu bestimmen. C(x) ist ein Proportionalitätsfaktor, in den die elastischen Konstanten des Materials des Metallbandes 1 eingehen. Aufgrund der Querkontraktion ist bei homogener Zugspannungsverteilung die Amplitude am Rand des Bleches größer als in der Mitte. Deshalb ist C(x) eine Funktion von x. C(x) kann aus Finite-Elemente-Rechnungen bestimmt werden.

$1/A_0$ ist ein Term, der die Biegesteifigkeit des Bleches berücksichtigt. $A_0$ ist die Amplitude, die gemessen wird, wenn die Zugspannung null ist. Wegen der Biegesteifigkeit des Metallbandes 1 ist $A_0$ endlich. Für dünne Metallbänder, d.h. für Metallbänder, die dünner als 1 mm sind, kann $1/A_0$ gleich null gesetzt werden.

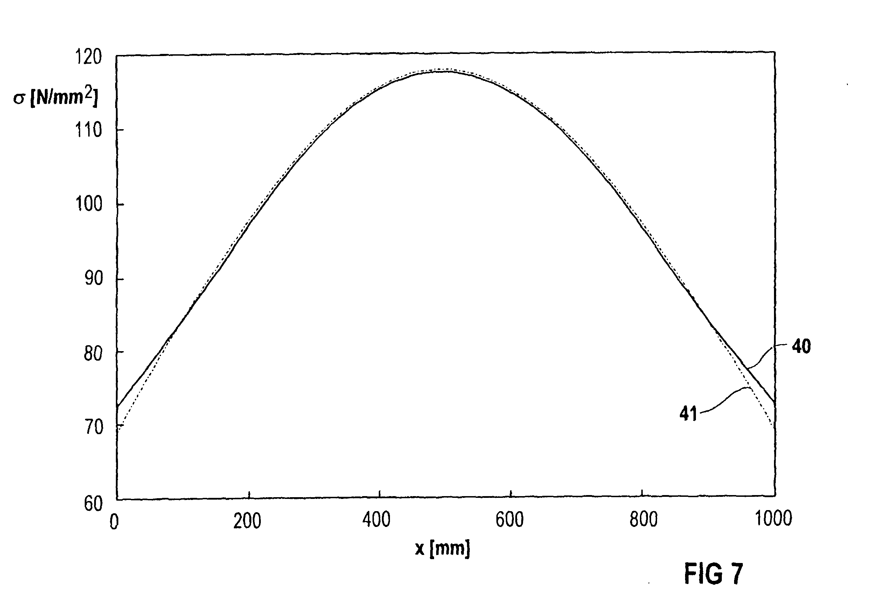

FIG 7 zeigt eine im Rahmen einer Finite-Elemente-Simulation mittels des erfindungsgemäßen Verfahrens bestimmte Kurve 40 einer Zugspannung σ in $\frac{N}{mm^2}$ in einem Metallband über die Position x in mm auf dem Metallband in Querrichtung im Vergleich zu einer Kurve 41 einer dem Metallband aufgeprägten Zugspannung σ in $\frac{N}{mm^2}$. Die Kurve verdeutlicht, daß es mittels des erfindungsgemäßen Verfahrens möglich ist, die Zugspannung σ in einem Metallband besonders präzise zu ermitteln.

**Patentansprüche**

1. Einrichtung zur Messung der Zugspannungsverteilung über die Breite eines Metallbandes zwischen zwei Walzgerüsten, zwischen einem Walzgerüst und einem Haspel, in einem Streckgerüst oder vor oder hinter einer Umlenkrolle, mit einer Auslenkvorrichtung zur Auslenkung des Metallbandes, mit einer Messvorrichtung zur Messung der Auslenkung des Metallbandes und mit einer Recheneinrichtung zur Berechnung der Zugspannungsverteilung in Abhängigkeit von der Auslenkung des Metallbandes über seine Breite, wobei die Auslenkvorrichtung als Saugvorrichtung zum Ansaugen des Metallbandes ausgebildet ist.

2. Einrichtung nach Anspruch 1,
**dadurch gekennzeichnet,**
**daß** die Saugvorrichtung einen periodischen Luftstrom zur periodischen Auslenkung des Metallbandes, d.h. zur Erzeugung einer Biegewelle, insbesondere einer Biegewelle in Längsrichtung des Metallbandes, erzeugend ausgebildet ist.

3. Einrichtung nach Anspruch 2,
**dadurch gekennzeichnet,**
**daß** die Saugvorrichtung eine Modulationsvorrichtung zur Erzeugung eines periodischen Luftstroms mit einer Frequenz zwischen 5 und 40 Hz, insbesondere mit einer Frequenz zwischen 5 und 20 Hz, aufweist.

4. Einrichtung nach Anspruch 1, 2 oder 3,
**dadurch gekennzeichnet,**
**daß** die Saugvorrichtung einen Unterdruck zwischen 5 und 50 mbar erzeugend ausgebildet ist.

5. Einrichtung nach Anspruch 1, 2, 3 oder 4,
**dadurch gekennzeichnet,**
**daß** die Saugvorrichtung in einem Abstand von 1 bis 10 mm, vorteilhafterweise 5 mm, vom Metallband angeordnet ist.

6. Einrichtung nach Anspruch 1, 2, 3, 4 oder 5,
**dadurch gekennzeichnet,**
**daß** die Saugvorrichtung Luftzuführungsplatten aufweist, die mit dem Metallband einen Luftkanal bilden.

7. Einrichtung nach Anspruch 6,
**dadurch gekennzeichnet,**
**daß** die Luftzuführungsplatten zwischen 5 und 30 cm, insbesondere 20 cm, breit sind.

8. Einrichtung nach einem der vorhergehenden Ansprüche,
**dadurch gekennzeichnet,**
**daß** sie eine Umlenkrolle zum Umlenken des Metallbandes aufweist.

9. Einrichtung nach Anspruch 8,
**dadurch gekennzeichnet,**
**daß** die Saugvorrichtung 10 bis 30 cm von der Umlenkrolle entfernt angeordnet ist.

10. Einrichtung nach einem der vorhergehenden Ansprüche,
**dadurch gekennzeichnet,**
**daß** die Saugvorrichtung als Drucklufteinrichtung zum Blasen von Druckluft gegen das Metallband mit einer Geschwindigkeit ausgebildet ist, die oberhalb der Geschwindigkeit liegt, ab der das hydrodynamische Paradoxon wirksam wird.

11. Einrichtung nach einem der vorhergehenden Ansprüche,
**dadurch gekennzeichnet,**
**daß** die Meßeinrichtung zumindest einen Auslenkungssensor, der als Wirbelstromsensor, kapazitiver Abstandssensor, optischer Abstandssensor oder Ultraschallabstandssensor ausgebildet ist.

12. Einrichtung nach einem der vorhergehenden Ansprüche,
**dadurch gekennzeichnet,**
**daß** die Meßeinrichtung zumindest zwei, insbesondere als Sensorzeilen ausgebildete, Auslenkungssensoren aufweist.

13. Einrichtung nach Anspruch 12,
**dadurch gekennzeichnet,**
**daß** die Meßeinrichtung zumindest drei, insbesondere als Sensorzeilen ausgebildete, Auslenkungssensoren aufweist.

**Claims**

1. Device for measuring the tensile stress distribution over the width of a metal strip between two roll stands, between a roll stand and a coiler, in a leveller or upstream or downstream from a guide roller, with a deflection device for deflecting the metal strip, with a measuring device for measuring the deflection of the metal strip and with a computing device for calculating the tensile stress distribution as a function of the deflection of the metal strip over its width, the deflection device being designed as a suction device for applying suction to the metal strip.

2. Device according to Claim 1,
**characterized in that**
the suction device is designed to generate a periodic air stream for the periodic deflection of the metal strip, i.e., for generating a flexural wave, in particular a flexural wave in the longitudinal direction of the metal strip.

3. Device according to Claim 2,
**characterized in that**
the suction device has a modulation device for generating a periodic air stream at a frequency of between 5 and 40 Hz, in particular at a frequency of between 5 and 20 Hz.

4. Device according to any one of Claims 1, 2 and 3,
**characterized in that**
the suction device is designed to generate a negative pressure of between 5 and 50 mbar.

5. Device according to any one of Claims 1, 2, 3 and 4,
**characterized in that**
the suction device is disposed at a distance of 1 to 10 mm, advantageously 5 mm, from the metal strip.

6. Device according to any one of Claims 1, 2, 3, 4, and 5,
**characterized in that**
the suction device has air infeed plates which, with the metal strip, form an air duct.

7. Device according to Claim 6,
**characterized in that**
the air infeed plates are between 5 and 30 cm, in particular 20 cm, wide.

8. Device according to any one of the preceding Claims,
**characterized in that**
it has a guide roller for guiding the metal strip.

9. Device according to Claim 8,
**characterized in that**
the suction device is disposed at a distance of 10 to 30 cm from the guide roller.

10. Device according to any one of the preceding Claims,
**characterized in that**
the suction device is designed as a compressed-air device for blowing compressed air against the metal strip at a velocity which is above the velocity from which the hydrodynamic paradox takes effect.

11. Device according to any one of the preceding Claims,
**characterized in that**
the measuring device has at least one deflection sensor which is designed as an eddy-current sensor, capacitive distance sensor, optical distance sensor or ultrasound distance sensor.

12. Device according to any one of the preceding Claims,
**characterized in that**
the measuring device has at least two deflection sensors, in particular, designed as rows of sensors.

13. Device according to Claim 12,
**characterized in that**
the measuring device has at least three deflection sensors, in particular, designed as rows of sensors.

**Revendications**

1. Dispositif de mesure de la répartition de l'effort de traction sur la largeur d'un feuillard métallique entre deux cages de laminoir, entre une cage de laminoir et une enrouleuse, dans une cage dégrossisseuse ou en amont ou en aval d'un rouleau guide comprenant un dispositif de déflexion du feuillard métallique, un dispositif de mesure de la déflexion du feuillard métallique et un dispositif de calcul de la répartition des efforts de traction en fonction de la déflexion du feuillard métallique sur sa largeur, le dispositif de déflexion étant constitué en dispositif d'aspiration du feuillard métallique.

2. Dispositif suivant la revendication 1, **caractérisé en ce que** le dispositif d'aspiration est constitué de manière à produire un courant d'air périodique pour la déflexion périodique du feuillard métallique, c'est-à-dire pour la production d'une ondulation de flexion, notamment d'une ondulation de flexion dans la direction longitudinale du feuillard métallique.

3. Dispositif suivant la revendication 2, **caractérisé** en que le dispositif d'aspiration a un dispositif de modulation destiné à produire un courant d'air périodique d'une fréquence comprise entre 5 et 40 Hz, notamment d'une fréquence comprise entre 5 et 20 Hz.

4. Dispositif suivant la revendication 1, 2 ou 3, **caractérisé en ce que** le dispositif d'aspiration est constitué pour produire une dépression comprise entre 5 et 50 mbar.

5. Dispositif suivant la revendication 1, 2, 3 ou 4, **caractérisé en ce que** le dispositif d'aspiration est disposé à une distance de 1 à 10 mm, de préférence de 5 mm du feuillard métallique.

6. Dispositif suivant la revendication 1, 2, 3, 4 ou 5, **caractérisé en ce que** le dispositif d'aspiration a des plaques d'apport d'air qui forment avec le feuillard métallique un canal pour de l'air.

7. Dispositif suivant la revendication 6, **caractérisé en ce que** les plaques d'apport d'air ont une largeur comprise entre 5 à 30 cm, notamment de 20 cm.

8. Dispositif suivant l'une des revendications précédentes, **caractérisé en ce qu'**il comprend un rouleau de déviation du feuillard métallique.

9. Dispositif suivant la revendication 8, **caractérisé en ce que** le dispositif d'aspiration est éloigné de 10 à 30 cm du rouleau de déviation.

10. Dispositif suivant l'une des revendications précédentes, **caractérisé en ce que** le dispositif d'aspiration est constitué en dispositif à air comprimé d'insufflation d'air comprimé sur le feuillard métallique à une vitesse qui est supérieure à la vitesse à partir de laquelle le paradoxe hydrodynamique est efficace.

11. Dispositif suivant l'une des revendications précédentes, **caractérisé en ce que** le dispositif de mesure a au moins un capteur de déflexion qui est constitué en capteur à courant de Foucault, en capteur capacitif de distance, en capteur optique de distance ou en capteur de distance à ultrasons.

12. Dispositif suivant l'une des revendications précédentes, **caractérisé en ce que** le dispositif de mesure a au moins deux capteurs de déflexion constitués notamment sous la forme de lignes de capteur.

13. Dispositif suivant la revendication 12, **caractérisé en ce que** le dispositif de mesure a au moins trois capteurs de déflexion, situés notamment sous la forme de lignes de capteur.

FIG 1

FIG 2

FIG 3

FIG 4

**FIG 5**

EP 0 977 978 B1

FIG 6

FIG 7